(19) Europäisches Patentamt
European Patent Office
Office européen des brevets

(11) **EP 2 623 384 A1**

(12) **EUROPEAN PATENT APPLICATION**
published in accordance with Art. 153(4) EPC

(43) Date of publication:
**07.08.2013 Bulletin 2013/32**

(51) Int Cl.:
**B60W 10/10** (2012.01)　**B60K 6/445** (2007.10)
**B60K 6/543** (2007.10)　**B60K 6/547** (2007.10)
**B60W 10/08** (2006.01)　**B60W 20/00** (2006.01)

(21) Application number: **10857806.3**

(22) Date of filing: **27.09.2010**

(86) International application number:
**PCT/JP2010/066735**

(87) International publication number:
**WO 2012/042591 (05.04.2012 Gazette 2012/14)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **TOYOTA JIDOSHA KABUSHIKI KAISHA**
**Aichi 471-8571 (JP)**

(72) Inventors:
• **OTSUBO Hideaki**
**Toyota-shi**
**Aichi 471-8571 (JP)**

• **ISHIKAWA Naoki**
**Toyota-shi**
**Aichi 471-8571 (JP)**
• **NOHARA Hideharu**
**Toyota-shi**
**Aichi 471-8571 (JP)**
• **TSUTSUMI Takahiko**
**Toyota-shi**
**Aichi 471-8571 (JP)**

(74) Representative: **TBK**
**Bavariaring 4-6**
**80336 München (DE)**

(54) **CONTROL DEVICE FOR HYBRID VEHICLE**

(57)　A control apparatus for a hybrid vehicle provided with an electrically operated continuously-variable transmitting portion and a step-variable transmitting portion, which control apparatus permits an adequate control of a shifting action of the step-variable transmitting portion, while reducing deterioration of fuel economy of the hybrid vehicle.

The control apparatus is configured to implement concurrent controls of a movement of an operating point of an engine 12 and a shifting action of the step-variable transmitting portion 20, such that an electric energy generation/consumption balance value in an overall transmission mechanism consisting of the electrically operated continuously-variable transmitting portion 19 and the step-variable transmitting portion 20 is controlled by controlling a change of a rotary motion of each of at least one of a sun gear SO corresponding to a g-axis, a carrier C0 corresponding to an e-axis and a ring gear R0 corresponding to an m-axis, so that a shifting shock of the step-variable transmitting portion can be reduced while controlling the electric energy generation/consumption balance to a desired value.

FIG.4

EP 2 623 384 A1

**Description**

TECHNICAL FIED

The present invention relates to a control device for a hybrid vehicle provided with an electrically operated continuously-variable transmitting portion and a step-variable transmitting portion, and more particularly to improvements of the control device for reducing deterioration of fuel economy during shifting actions of the transmitting portions.

BACKGROUND ART

There is known a hybrid vehicle provided with an electrically operated continuously-variable transmitting portion, and a step-variable transmitting portion constituting a part of a power transmitting path between the electrically operated continuously-variable transmitting portion and drive wheels. One example of such a hybrid vehicle is provided with: an electrically operated continuously-variable transmitting portion having a differential mechanism, a first electric motor and a second electric motor; and a step-variable transmitting portion constituting a part of a power transmitting path between the electrically operated continuously-variable transmitting portion and drive wheels. The differential mechanism is provided with a first rotary element, a second rotary element serving as an input rotary member connected to an engine, and a third rotary element serving as an output rotary member. The first electric motor is connected to the first rotary element, while the second electric motor is operatively connected to a power transmitting path between the above-indicated third rotary element and the drive wheels. There is also proposed a technique which permits an adequate shifting control of such a hybrid vehicle. Patent Document 1 discloses an example of a control apparatus for a vehicular power transmitting system. According to this technique, where an output of the second electric motor is limited by a torque control thereof during a change of an input shaft speed of the step-variable transmitting portion (automatic transmitting portion), the second electric motor is controlled to operate as an electric generator by the engine, for canceling the output limitation of the second electric motor, to thereby reduce a shifting shock and a delay of the shifting action.

PRIOR ART DOCUMENTS

Patent Documents

Patent Document 1: JP-A-2009-166643

Patent Document 2: JP-A-2009-154724
Patent Document 3: JP-A-2009-096363

SUMMARY OF THE INVENTION

Object Achieved By The Invention

However, the above-described prior art technique is to generate electricity by increasing a torque of the engine according to limitation of discharging of electric power from an electric-energy storage device, so that an operating point of the engine changes in an uncontrolled manner. In a running state of the vehicle requiring a comparatively high torque of the engine, on the other hand, there is a high need for controlling the operating point of the engine from the standpoint of fuel economy, for instance, so that the operating point of the engine should not change in an uncontrolled manner. Further, a shifting control of the step-variable transmitting portion in an unstable running state with a comparatively high drive power, such as a shifting control of the step-variable transmitting portion in a running state with a comparatively high torque and a movement of the operating point of the engine by moving the engine speed suffers from a drawback of a failure to coordinate the vehicle drive power by electricity generation according to the above-described prior art technique. Thus, the prior art technique is limited in the degree of improvement of the fuel economy during the shifting action of the step-variable transmitting portion. In this respect, there has been a need for developing a control apparatus for a hybrid vehicle provided with an electrically operated continuously-variable transmitting portion and a step-variable transmitting portion, which control apparatus permits an adequate control of a shifting action of the step-variable transmitting portion, while reducing deterioration of fuel economy of the hybrid vehicle.

The present invention was made in view of the background art described above. It is therefore an object of the present invention to provide a control apparatus for a hybrid vehicle provided with an electrically operated continuously-variable transmitting portion and a step-variable transmitting portion, which control apparatus permits an adequate control of a shifting action of the step-variable transmitting portion, while reducing deterioration of fuel economy of the hybrid vehicle.

Means For Achieving The Object

The object indicated above is achieved according to the present invention, which provides a control apparatus for a hybrid vehicle provided with a differential mechanism provided with a first rotary element, a second rotary element functioning as an input rotary element and connected to an engine, and a third rotary element functioning as an output rotary element, a first electric motor connected to the first rotary element, an electrically operated continuously-variable transmitting portion having a second electric motor operatively connected to a power transmitting path from the above-described third rotary element to drive wheels, and a step-variable transmitting portion constituting a part of a power transmitting path from the electrically operated continuously-variable transmitting portion to the drive wheels, the control apparatus being characterized by implementing concurrent controls of a movement of an operating point of the above-described engine and a shifting action of the above-described step-variable transmitting portion, such that an electric energy generation/consumption balance value in an overall transmission mechanism consisting of the above-described electrically operated continuously-variable transmitting portion and step-variable transmitting portion is controlled by controlling a change of a rotary motion of each of at least one of the above-described first, second and third rotary elements.

ADVANTAGES OF THE INVENTION

The control apparatus according to the present invention described above is configured to implement the concurrent controls of the movement of the operating point of the above-described engine and the shifting action of the above-described step-variable transmitting portion, such that the electric energy generation/consumption balance value in the overall transmission mechanism consisting of the above-described electrically operated continuously-variable transmitting portion and step-variable transmitting portion is controlled by controlling the change of the rotary motion of each of at least one of the above-described first, second and third rotary elements, so that a shifting shock of the step-variable transmitting portion can be reduced while controlling the electric energy generation/consumption balance to a desired value. Namely, the control apparatus permits an adequate control of the shifting action while reducing deterioration of fuel economy of the hybrid vehicle.

In one preferred form of the invention, the control apparatus is configured to change rotating speeds of the above-described first, second and third rotary elements at the same rate from values before the above-described shifting action to values to be established after the shifting action. In this case, the electric energy generation/consumption balance can be controlled to a desired value in a practically advantageous manner.

According to another preferred form of the invention, the control apparatus is configured to control the above-described shifting action such that a pattern of change of a torque difference between an input torque of the above-described step-variable transmitting portion and a torque associated with a reaction force of an element provided in the above-described step-variable transmitting portion matches a pattern of change of a rotating speed of each of the above-described first, second and third rotary elements. In this case, the electric energy generation/consumption balance can be controlled to a desired value in a practically advantageous manner.

According to a further preferred form of the invention, the control apparatus is configured to control the above-described shifting action such that a sum of an energy amount generated by the above-described engine during the above-described shifting action, an energy amount which is associated with a reaction force generated during the shifting action by an element provided in the above-described step-variable transmitting portion , and an amount of change of a rotary motion energy of each of the above-described first, second and third rotary elements during the above-described shifting action is equal to a predetermined target value of the electric energy generation/consumption balance value. In this case, the electric energy generation/consumption balance can be controlled to a desired value in a practically advantageous manner.

According to a still further preferred form of the invention, the control apparatus is configured to calculate the above-described sum without taking account of an amount of the electric energy generation/consumption balance value which relates to the above-described first and second electric motors. In this case, the electric energy generation/ consumption balance can be controlled to a desired value in a practically advantageous manner.

BRIEF DESCRIPTION OF THE DRAWINGS

Fig. 1 is a view for explaining a hybrid vehicle to which the present invention is suitably applicable;
Fig. 2 is a collinear chart indicating relative rotating speeds of rotary elements of a power distributing device provided in the hybrid vehicle of Fig. 1;
Fig. 3 is a collinear chart indicating relative rotating speeds of rotary elements of a planetary gear set provided in a step-variable transmitting portion provided in the hybrid vehicle of Fig. 1;

Fig. 4 is a functional block diagram for explaining major control functions of an electronic control device provided for the hybrid vehicle of Fig. 1;

Fig. 5 is a view for explaining concurrent controls of a movement of an operating point of an engine and a shifting action of the step-variable transmitting portion, which concurrent controls are implemented according to one embodiment of this invention;

Fig. 6 is a view for explaining calculation of a basic wave pattern by a control device of the hybrid vehicle according to the embodiment of the invention;

Fig. 7 is a view illustrating a wave pattern of a timewise integral value of a torque difference between an input torque and a load torque of the step-variable transmitting portion, which is calculated by the control device of the hybrid vehicle according to the embodiment of the invention;

Fig. 8 is a view for explaining conditions that should be satisfied in the control by the control device of the hybrid vehicle according to the embodiment of the invention;

Fig. 9 is a time chart for explaining a result of simulation of the concurrent controls of the movement of the operating point of the engine and the shifting action of the step-variable transmitting portion;

Fig. 10 is a time chart for explaining a result of simulation of prior art concurrent controls of the movement of the operating point of the engine and the shifting action of the step-variable transmitting portion, which are implemented so as to keep an electric power generation/consumption balance value at zero, for comparison with the concurrent controls according to the embodiment of the invention;

Fig. 11 is a time chart for explaining a result of simulation of prior art concurrent controls of the movement of the operating point of the engine and the shifting action of the step-variable transmitting portion, which are implemented so as to control an output shaft torque in a normal pattern of change to be generally established in a well known shift-down action, for comparison with the concurrent controls according to the embodiment of the invention;

Fig. 12 is a time chart for explaining a result of simulation of the concurrent controls of the movement of the operating point of the engine and the shifting action of the step-variable transmitting portion, which are implemented according to another embodiment of this invention wherein a clutch pressure during the shifting action is controlled by calculating the electric power generation/consumption balance value so as to positively prevent an electric energy charging/ discharging balance value from being zeroed.; and

Fig. 13 is a flow chart illustrating a major portion of a shifting control by the electronic control device for the hybrid vehicle of Fig. 1.

MODE FOR CARRYING OUT THE INVENTION

Referring to the drawings, a preferred embodiment of this invention will be described in detail.

FIRST EMBODIMENT

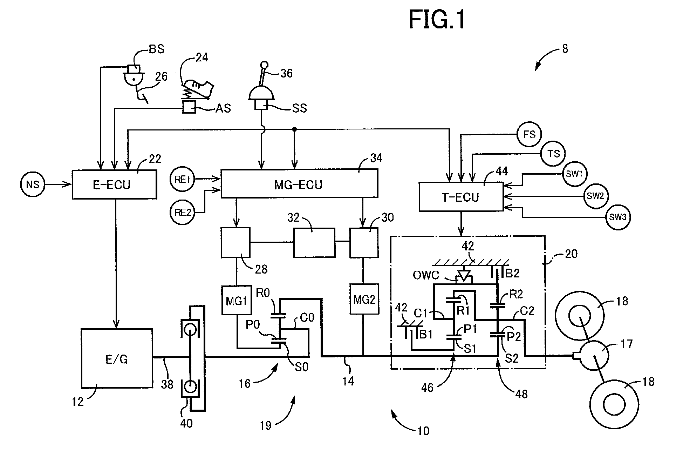

Fig. 1 is the view for explaining a hybrid vehicle 8 to which the present invention is suitably applicable. The hybrid vehicle 8 shown in Fig. 1 is suitably used as an FR (front-engine rear-drive) vehicle, for example, and is provided with a power transmitting system 10 having a power distributing device 16 configured to distribute a drive force generated by a main drive power source in the form of an engine 12, to a first electric motor in the form of a first motor/generator MG1 (hereinafter abbreviated as "MG1") and to a power transmitting member in the form of an output shaft 14. The power transmitting system 10 further has a second electric motor in the form of a second motor/generator MG2 (hereinafter abbreviated as "MG2") connected through a mechanically operated step-variable transmitting portion 20 to a power transmitting path between the power distributing device 16 and drive wheels 18. Torques generated by the above-indicated engine 12 and MG1 are transmitted to the above-indicated output shaft 14, and to the pair of right and left drive wheels 18 through a differential gear device 17.

In the power transmitting system 10 described above, the torque capacity to be transmitted from the above-indicated MG2 to the output shaft 14 is increased and reduced according to a presently selected speed ratio $\gamma_s$ of the step-variable transmitting portion 20 (= rotating speed of the MG2/rotating speed of the output shaft 20). The step-variable transmitting portion 20, which has a plurality of speed ratio values $\gamma_s$ not lower than "1", permits the output torque of the above-indicated MG2 to be boosted so that the boosted torque is transmitted to the output shaft 14, when the MG2 is operated to generate a vehicle drive force. In this respect, the required capacity and size of the MG2 can be further reduced. When the rotating speed of the output shaft 14 is raised in a high speed running of the vehicle, the speed ratio $\gamma_s$ of the above-indicated step-variable transmitting portion 20 is lowered to lower the operating speed of the above-indicated MG2, for thereby permitting the MG2 to be kept in a state of high operating efficiency. When the rotating speed of the output shaft 14 is lowered, on the other hand, the speed ratio $\gamma_s$ of the above-indicated step-variable transmitting portion 20 is increased as needed.

The above-indicated engine 12 is a known internal combustion engine such as a gasoline engine or a diesel engine, which operates to generate a drive force by combustion of a suitable fuel. An angle of opening of a throttle valve or an intake air quantity, an amount of supply of the fuel, an ignition timing and other operating states of the engine 12 are electrically controlled by an engine control electronic control device (hereinafter abbreviated as "E-ECU") 22 which is principally constituted by a so-called microcomputer incorporating a CPU, a RAM, a ROM and an input-output interface, for instance. The above-indicated E-ECU 22 is configured to receive an output signal of an accelerator angle sensor AS indicative of an operation amount Acc of an accelerator pedal 24, an output signal of a brake sensor BS indicative of an operated state of a brake pedal 26, an output signal of an engine speed sensor NS indicative of an operating speed of the engine 12, etc.

Each of the above-indicated MG1 and MG2 is a synchronous electric motor, for example, which has at least one of a function of an electric motor operable to generate a vehicle drive torque and a function of an electric generator, and which is preferably configured to be operable selectively as the electric motor or the electric generator. The MG1 and MG2 are connected to an electric-energy storage device 32 such as a battery or a capacitor through respective inverters 28 and 30. These inverters 28, 30 are controlled by a motor/generator control electronic control device (hereinafter abbreviated as "MG-ECU" 34) principally constituted by a so-called microcomputer, to adjust or set the output torque or the regenerative torque. The above-indicated MG-ECU 34 is configured to receive an output signal of a shift position sensor SS indicative of a presently selected position of a shift lever 36, an output signal of a MG1 resolver RE1 indicative of the operating speed of the MG1, an output signal of a MG2 resolver RE2 indicative of the operating speed of the MG2, etc.

The above-described power distributing device 16 is constituted by a planetary gear set of a single-pinion type provided with three rotary elements, which consist of: a sun gear S0; a ring gear R0 disposed coaxially with the sun gear S0; and a carrier C0 supporting a pinion gear P0 meshing with the sun gear S0 and the ring gear R0, such that the pinion gear P0 is rotated about its axis and an axis of the planetary gear set. This planetary gear set is disposed coaxially with the above-described engine 12 and step-variable transmitting portion 20. Since each of the above-indicated power distributing device 16 and step-variable transmitting portion 20 is symmetric in construction with respect to its axis, its lower half is not shown in Fig. 1.

In the above-described power transmitting system 10, a crankshaft 38 of the above-described engine 12 is connected through a damper 40 to the carrier C0 of the above-described power distributing device 16, and the above-indicated MG1 is connected to the sun gear S0, while the above-indicated output shaft 14 which is an input shaft of the above-described step-variable transmitting portion 20 is connected to the ring gear R0. In the power distributing device 16, the carrier C0 functions as an input element, and the sun gear S0 functions as a reaction element, while the ring gear R0 functions as an output element.

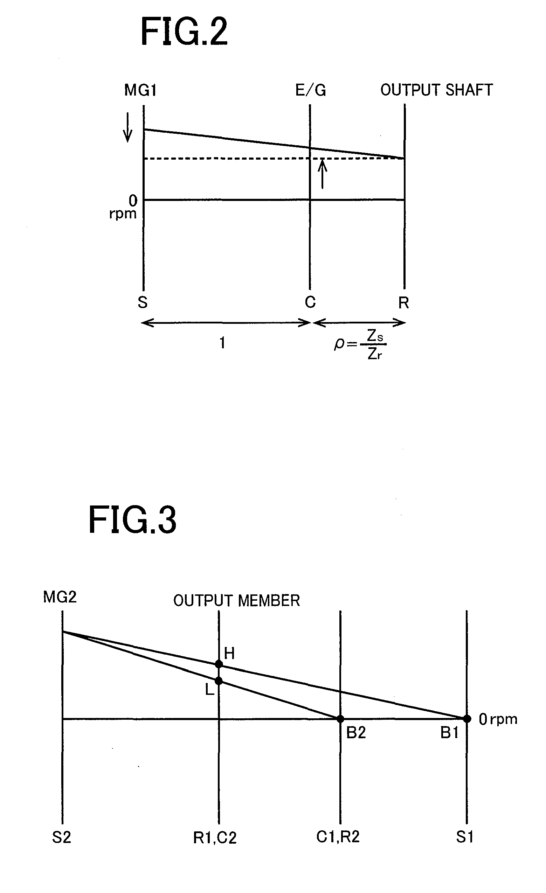

The relative rotating speeds of the rotary elements of the above-described power distributing device 16 are indicated in the collinear chart of Fig. 2. In this collinear chart, vertical axes S, C and R respectively indicate the rotating speeds of the sun gear S0, carrier C0 and ring gear R0. Distances between adjacent ones of the vertical axes S, C and R are determined such that the distance between the vertical axes C and R is equal to p (= number Zs of teeth of the sun gear S0/number Zr of teeth of the ring gear R0) where the distance between the vertical axes S and C is equal to "1". In this power distributing device 16, the MG1 functions as the electric generator when a reaction torque corresponding to the output torque of the above-indicated engine 12 transmitted to the carrier C0 is transmitted to the sun gear S0. The operating speed $N_E$ of the above-indicated engine 12 can be varied continuously (without a stepping change) by raising and lower the operating speed of the MG1 while the operating speed NO of the ring gear R0 (output shaft speed) is kept constant. A broken line in Fig. 2 indicates a drop of the operating speed $N_E$ of the engine 12 when the operating speed of the MG1 is lowered from a value indicated by a solid line. Namely, the operating speed $N_E$ of the engine 12 can be controlled to a value for maximum fuel economy, by controlling the MG1. This type of hybrid control is called a mechanical distribution type or a split type.

Namely, the above-described power distributing device 16 provided in the above-described power transmitting system 10 is equivalent to a differential mechanism provided with a first rotary element in the form of the sun gear S0, a second rotary element in the form of the carrier C0 functioning as an input rotary element, and a third rotary element in the form of the ring gear R0 functioning as an output rotary element. The above-indicated first rotary element in the form of the sun gear S0 is connected to the above-described MG1, and the second rotary element in the form of the carrier C0 is connected to the above-described engine 12, while the third rotary element in the form of the ring gear R0 is connected to the above-described MG2, so that the above-indicated power distributing device 16, MG1 and MG2 cooperate to constitute an electrically operated continuously-variable transmitting portion 19.

Referring back to Fig. 1, the above-described step-variable transmitting portion 20 is connected in series to a power transmitting path between the above-indicated electrically operated continuously-variable transmitting portion 19 and the drive wheels 18, and is constituted by two planetary gear sets 46 and 48 rotary elements of which are connected to each other. That is, the step-variable transmitting portion 20 is provided with: a planetary gear set 46 of a single-pinion type configured to perform a known differential function and having three rotary elements consisting of a sun gear S1, a ring gear R1 disposed coaxially with the sun gear S1, and a carrier C1 supporting a pinion gear P1 meshing with the sun gear S1 and ring gear R1, such that the pinion gear P1 is rotatable about its axis and an axis of the planetary gear set 46; and a planetary gear set 48 of a single-pinion type configured to perform a known differential function and having three rotary elements consisting of a sun gear S2, a ring gear R2 disposed coaxially with the sun gear S2, and a carrier C2 supporting a pinion gear P2 meshing with the sun gear S2 and ring gear R2, such that the pinion gear P2 is rotatable about its axis and an axis of the planetary gear set 48. The carrier C1 and the ring gear R2 are connected to each other, while the ring gear R1 and the carrier C2 are connected to each other. Further, the above-indicated sun gear S2 is connected to the input member in the form of the above-indicated output shaft 14, while the above-indicated ring gear R1 and carrier C2 are connected to the output member in the form of the input shaft of the above-indicated differential gear device 17.

The above-indicated step-variable transmitting portion 20 is provided with a plurality of coupling elements for selectively establishing a plurality of speed positions having respective different speed ratio values. That is, a first brake B1 is provided between the sun gear S1 and a housing 42, for selectively fixing the sun gear S1 to the housing 42, while a second brake B2 is provided between the carrier C 1 and ring gear R2 connected to each other, and the housing 42, for selectively fixing the carrier C1 and ring gear R2 to the housing 42. Each of these first and second brakes B1 and B2 is a hydraulically operated coupling device of a multiple-disc type or a band type which is configured to generate a frictional engaging force corresponding to a hydraulic pressure of a working fluid supplied from a hydraulic control device not shown. The torque capacity of each brake B1, B2 is continuously variable according to an engaging hydraulic pressure generated by an appropriate hydraulic actuator. The step-variable transmitting portion 20 is further provided with a one-way clutch OWC which is disposed between the housing 42 and the above-described carrier C1 and ring gear R2 connected to each other, and which permits rotary motions of the carrier C1 and ring gear R2 relative to the housing 42 in the direction of operation of the above-described engine 12, but inhibits the relative rotary motions in the reverse direction.

In the step-variable transmitting portion 20 constructed as described above, the above-indicated sun gear S2 functions as an input member, and the above-indicated ring gear R1 and carrier C2 connected to each other function as an output member. The step-variable transmitting portion 20 is shifted to its high-speed position H having a speed ratio $\gamma_{sh}$ higher than "1", when the above-indicated first brake B1 is brought to its engaged state, and is shifted to its low-speed position L having a speed ratio $\gamma_{s}l$ higher than the speed ratio $\gamma_{sh}$ of the high-speed position, when the above-indicated second brake B2 is brought to its engaged state. During the above-indicated shifting action from the high-speed position H to the low-speed position L, the above-indicated first brake B1 is placed in its released state so that the rotary motions of the above-indicated carrier C1 and ring gear R2 relative to the housing 42 are inhibited by the above-indicated one-way clutch OWC, whereby the step-variable transmitting portion 20 shifted to its low-speed position L, irrespective of whether the above-indicated second brake B2 is placed in its engaged state. The step-variable transmitting portion 20 is shifted between those high-speed and low-speed positions H and L, on the basis of a running state of the vehicle as represented by the vehicle running speed and a value relating to a vehicle operator's required vehicle drive force (target vehicle drive force). Described more specifically, the step-variable transmitting portion 20 is subjected to a shifting control to establish one of the high-speed and low-speed positions H, L, on the basis of the vehicle running state, and according to a map (shifting boundary lines) which defines the speed positions and which is obtained by experimentation and stored in memory. This shifting control is implemented by a shifting control electronic control device (abbreviated as "T-ECU") 44 constituted principally by a so-called microcomputer. This T-ECU 44 is configured to receive an output signal of a temperature sensor TS indicative of a temperature of the working fluid, an output signal of a first hydraulic pressure switch SW1 indicative of the engaging hydraulic pressure of the above-indicated first brake B1, an output signal of a second hydraulic pressure switch SW2 indicative of the engaging hydraulic pressure of the above-indicated second brake B2, an output signal of a third hydraulic pressure switch SW3 indicative of a line pressure PL, etc.

Fig. 3 is the collinear chart having four vertical axes consisting of an axis S2, an axis R1,C2, an axis C1, R2 and an axis S1 which indicate relative rotating speeds of the rotary elements of the planetary gear sets 46, 48 of the above-described step-variable transmitting portion 20. The vertical axis S2, vertical axis R1,C2, vertical axis C1, R2 and vertical axis S1 respectively indicate the rotating speed of the above-indicated sun gear S2, the rotating speed of the above-indicated ring gear R1 and carrier C2 connected to each other, the rotating speed of the above-indicated carrier C1 and ring gear R2 connected to each other, and the rotating speed of the above-indicated sun gear S1. As indicated in this collinear chart, the above-described step-variable transmitting portion 20 is placed in its low-speed position L when the above-indicated carrier C 1 and ring gear R2 are fixed to the above-indicated housing 42 by the above-indicated second brake B2 or the one-way clutch OWC. In the low-speed position L, an assisting torque generated by the above-described MG2 is boosted according to the presently established speed ratio $\gamma_{sl}$, so that the boosted assisting torque is transmitted to the above-indicated output shaft 14. When the above-indicated sun gear S 1 is fixed to the above-indicated housing 42 by the above-indicated first brake B1, on the other hand, the step-variable transmitting portion 20 is placed in its high-speed position H having the speed ratio $\gamma_{sh}$ lower than the speed ratio $\gamma_{sl}$ of the low-speed position L. Since the speed ratio of the high-speed position H is also higher than "1", the assisting torque generated by the above-described MG2 is boosted according to the speed ratio $\gamma_{sh}$, so that the boosted assisting torque is transmitted to the above-indicated output shaft 14. The torque transmitted to the output shaft 14 is kept constant at an output torque value as boosted according to the speed ratio of the selected speed position while the low-speed position L or high-speed position H is steadily established. In the process of a shifting action of the above-described step-variable transmitting portion 20, however, the torque transmitted to the output shaft 14 is influenced by an inertia torque determined by the torque capacity and a change of the rotating speed of the relevant brake B1, B2. It is also noted that the torque transmitted to the above-indicated output shaft 14 is a positive value when the above-described MG2 is placed in its operated state, and a negative value when the MG2 is placed in its non-operated state.

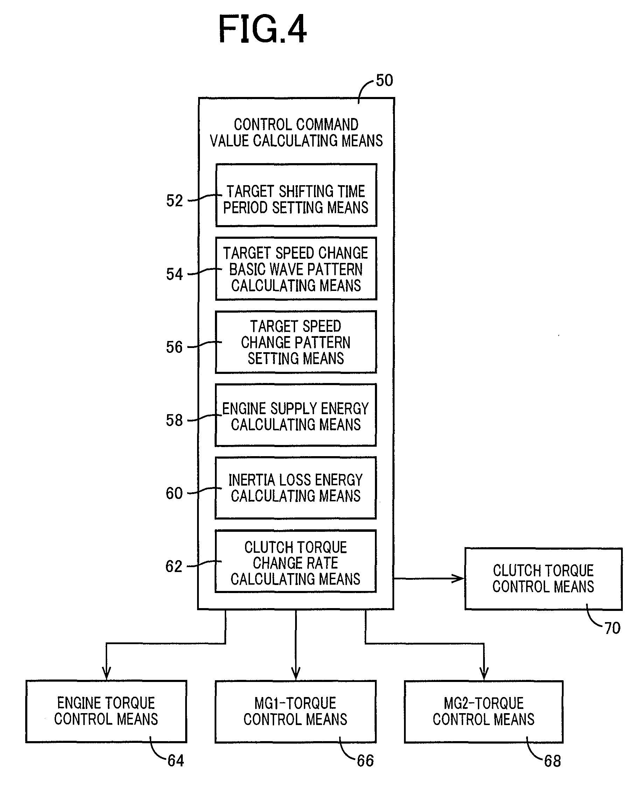

Fig. 4 is the functional block diagram for explaining major control functions of the above-described E-ECU 22, MG-ECU 34 and T-ECU 44. Preferably, control command value calculating means 50 shown in Fig. 4 is provided in the above-indicated E-ECU 22 or MG-ECU 34. Also preferably, engine torque control means 64 is provided in the above-indicated E-ECU 22, and MG1-torque control means 66 and MG2-torque control means 68 are provided in the above-indicated MG-ECU 34, while clutch torque control means 70 is provided in the above-indicated T-ECU 44. In the power transmitting system 10 according to the present embodiment, the above-indicated E-ECU 22, MG-ECU 34 and T-ECU 44 are mutually separate control devices. However, the above-described hybrid vehicle 8 may use a single control apparatus having the functions of those separate control devices. In this case, each of the various control means shown in Fig. 4 is preferably entirely provided in the single control apparatus.

The above-indicated control command value calculating means 50 is configured to calculate a target value of a change of the rotary motion of each rotary element provided in the above-described electrically operated continuously-variable transmitting portion 19, when a movement of an operating point of the above-described engine 12 and a shifting action of the above-described step-variable transmitting portion 20 are concurrently controlled. Namely, the control command value calculating means 50 calculates the target value of the change of the rotary motion of at least one of the first rotary element in the form of the above-described sun gear S0 (MG1), the second rotary element in the form of the above-described carrier C0 (engine 12) and the third rotary element in the form of the above-described ring gear R0 (MG2). The "target value of the change of the rotary motion" of each rotary element is the target value of a timewise change of the rotating speed or torque of each rotary element, and is equivalent to a continuous change of the target value from a moment at which the shifting control of the above-described step-variable transmitting portion 20 is initiated, to a moment at which the shifting control is terminated.

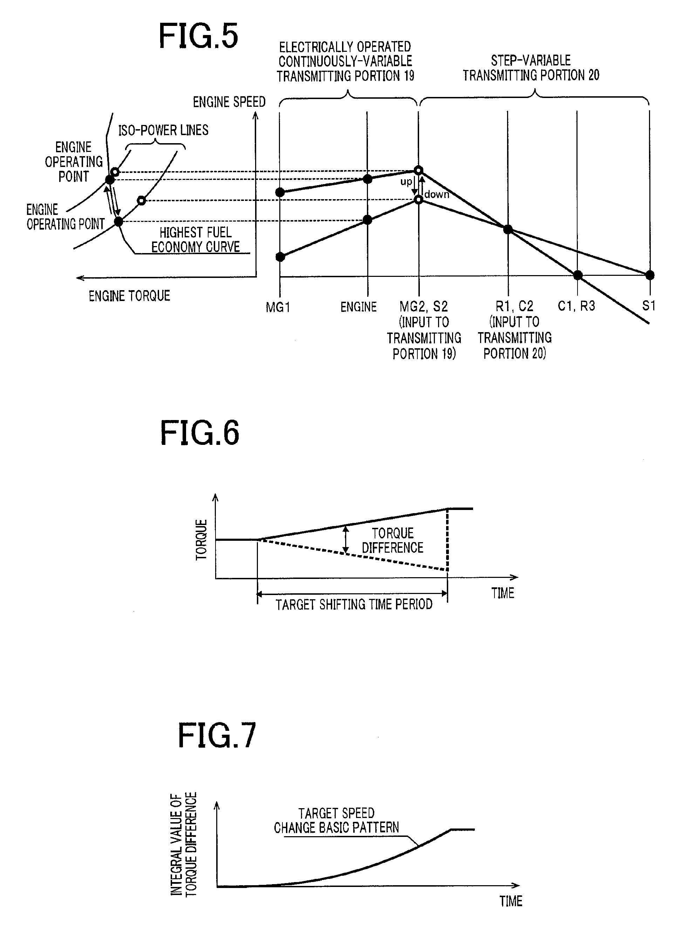

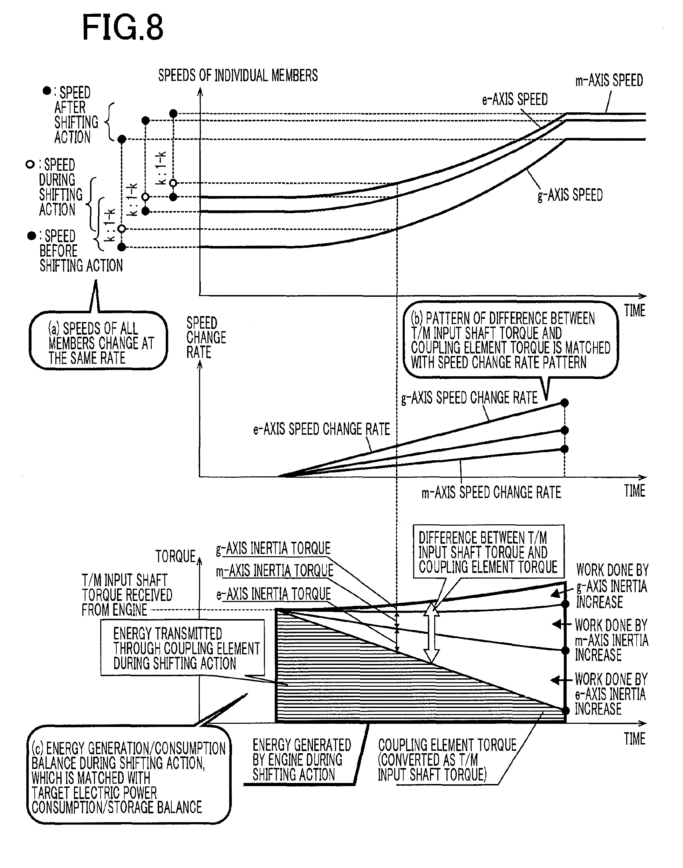

Fig. 5 is the view for explaining concurrent controls of the movement of the operating point of the above-described engine 12 and the shifting action of the step-variable transmitting portion 20, which concurrent controls are implemented according to the present embodiment of the invention. In the above-described hybrid vehicle 8, the control of the movement of the operating point of the above-described engine 12 and the control of the shifting action of the above-described step-variable transmitting portion 20 may be implemented concurrently (in synchronization with each other), as indicated in Fig. 8. That is, the above-described step-variable transmitting portion 20 may be shifted from the low-speed position L to the high-speed position H (shifted up) or shifted from the high-speed position H to the low-speed position L (shifted down), while the operating point of the above-described engine 12 defined by its torque and speed is moved. Although the following description refers to the shifting action from the high-speed position H to the low-speed position L (shift-down action) initiated by a kick-down operation of the accelerator pedal, for instance, during the movement of the operating point of the above-described engine 12, the control according to the present embodiment is equally applicable to the shifting action from the low-speed position L to the high-speed position H. In the control of the shifting action of the above-described step-variable transmitting portion 20 from the high-speed position H to the low-speed position L, the above-described first brake B1 is released with a result of locking of the above-described one-way clutch OWC to inhibit the rotary motions of the above-described carrier C 1 and ring gear R2 relative to the housing 42, so that the step-variable transmitting portion 20 is shifted to the low-speed position L.

As indicated in Fig. 5, the engine operating point is moved by changing a torque $T_e$ and speed $N_e$ of the engine 12 along a predetermined highest (optimum) fuel economy curve, so that the engine 12 produces a required drive power. In a running state requiring a comparatively high value of the engine torque, there is a high need for controlling the engine operating point from the standpoint of the fuel economy, that is, the engine operating point should not change in an uncontrolled manner. In this running state, the prior art technique does not permit an adequate control of the engine operating point. Further, a shifting control of the step-variable transmitting portion 20 in an unstable running state, such as a shifting control of the step-variable transmitting portion 20 in a running state with a comparatively high torque and a movement of the operating point of the engine by changing the engine speed suffers from a drawback of a failure to coordinate the vehicle drive power according to the prior art technique. Namely, the shifting action of the above-described step-variable transmitting portion 20 is performed while a comparative large drive force is transmitted therethrough, when the movement of the operating point of the above-described engine 12 and the shifting action of the above-described step-variable transmitting portion 20 are concurrently controlled in the running state requiring the comparatively high value of the engine torque $T_e$, so that the required drive forces generated by the above-described MG1 and MG2 are accordingly large, whereby the operating point of the engine 12 (defined by its torque and speed) is moved by changing the engine torque by an accordingly large amount if the required vehicle drive force is provided by electricity generation with an increase of the engine torque according to the prior art technique. In addition, this movement of the engine operating point takes place in an uncontrolled manner depending upon a change of the electric power generation/consumption balance value. Accordingly, the shifting action of the step-variable transmitting portion 20 should be controlled while considering an overall electric power balance taking account of an overall electric energy generation/consumption balance value in an overall transmission mechanism consisting of the above-described electrically operated continuously-variable transmitting portion 19 and step-variable transmitting portion 20. Preferably, the overall electric energy generation/consumption balance (overall electric power generation/consumption balance) in the above-indicated transmission mechanism should be controlled to a predetermined value, for instance, to an almost zero value. The following description of the present embodiment refers to this manner of control of the overall electric energy generation/consumption balance value.

The control apparatus for the hybrid vehicle according to the present embodiment is configured to implement the concurrent controls of the movement of the operating point of the above-described engine 12 and the shifting action of the step-variable transmitting portion 20, so as to substantially zero the overall electric energy generation/consumption balance value in the transmission mechanism, by means of the above-indicated engine torque control means 64, MG-1 torque control means 66, MG2-torque control means 68, and clutch torque control means 70. To this end, the above-indicated control command value calculating means 50 includes target shifting time period setting means 52, target speed change basic wave pattern calculating means 54, target speed change pattern setting means 56, engine energy supply calculating means 58, inertia loss energy calculating means 60 and clutch torque change rate calculating means 62. Control operations of these control means will be described. The following description refers to the control of a movement of the operating point of the above-described engine 12 according to the present embodiment, with a linear change of the torque of the engine 12 from a value before the shifting action of the above-described step-variable transmitting portion 20 to a value after the shifting action, during an operation of the engine 12, and also refers to the control of the shifting action of the above-described step-variable transmitting portion 20 according to the embodiment, with a linear decrease at a predetermined rate (constant rate) of the engaging torque of the above-described first brake B1 which is to be released.

The above-described target shifting time period setting means 52 is configured to set a target shifting time period from the moment of initiation of the shifting action of the above-described step-variable transmitting portion 20 to the moment of termination of the shifting action. For example, the target shifting time period setting means 52 sets (calculates) the target shifting time period of the shifting action of the above-described step-variable transmitting portion 20 from the high-speed position H to the low-speed position L, from the moment of initiation of the shifting action at which a releasing action (a hydraulic pressure drop) of the above-described first brake B1 as the coupling element to be released is initiated, to the moment of termination of the shifting action at which the synchronous speed is established with a locking action of the above-described one-way clutch OWC. The target shifting time period setting means 52 sets this target shifting time period on the basis of the temperature of the working fluid detected by the above-indicated temperature sensor TS, and according to a predetermined relationship between the target shifting time period and the temperature. Preferably, this relationship is predetermined such that the above-indicated target shifting time period increases with a decrease of the temperature of the working fluid detected by oil temperature sensor TS. Preferably, the target shifting time period setting means 52 sets (calculates) the above-indicated target shifting time period from the moment of initiation of the shifting action to the moment of termination of the shifting action, on the basis of the running speed of the vehicle or the input torque and according to a predetermined relationship between the target shifting time period and the vehicle running speed or input torque. This relationship is predetermined while taking account of the durability of the friction members with respect to a change of inertia such that the above-indicated shifting time period increases with an increase of the vehicle running speed or input torque.

The above-indicated target speed change basic wave pattern calculating means 54 is configured to obtain a timewise change of a torque difference (indicated in Fig. 6) between the input shaft torque and the torque of the first brake B1 converted as the input shaft torque, which permits the electric energy generation/consumption balance value to be zeroed, for instance, during the shifting action, for each of the first rotary element in the form of the sun gear S0, the second rotary element or input rotary member in the form of the carrier C0 and the third rotary element or output rotary member in the form of the ring gear R0, and to calculate a basic wave pattern of a change of the rotating speed by integrating the timewise change of the obtained torque difference, as indicated in Fig. 7. Fig. 6 is the view for explaining calculation of the basic wave pattern by the target speed change basic wave pattern calculating means 54. In Fig. 6, solid lines represent a change of the input shaft torque of the above-described step-variable transmitting portion 20 received from the engine 12, MG1 and/or MG2, while broken lines represent a change of the load torque at the position of the input shaft of the step-variable transmitting portion 20 generated as the clutch torque, that is, as the engaging torque of the above-described first brake B1 as a reaction force, under the condition the electric energy generation/consumption balance value of the above-described electrically operated continuously-variable transmitting portion 19 during the target shifting time period from the moment of initiation of the shifting action of the above-described step-variable transmitting portion 20 to the moment of termination of the shifting action, which has been set by the target shifting time period setting means 52, is zero. An inclined one of the two broken lines represents a decrease of the torque of the coupling element in the form of the first brake B1 to be released, which is converted as the input shaft torque, while an upright one of the broken lines represents the torque converted as the input shaft torque upon completion of the engaging action of the one-way clutch OWC. On the condition that the electric energy generation/consumption balance value of the overall transmission mechanism consisting of the above-described electrically operated continuously-variable transmitting portion 19 and step-variable transmitting portion 20 is zero, the torque difference between the input shaft torque, that is, the torque of the above-described output shaft 14 and the clutch load, that is, the torque of the above-indicated first brake B1 changes as indicated in Fig. 6.

Fig. 7 is the view illustrating a wave pattern of a timewise integral value of the torque difference between the input torque and the load torque of the above-described step-variable transmitting portion 20. The timewise change of the torque difference between the input shaft torque and the clutch load indicated in Fig. 6 is integrated into the wave pattern indicated in Fig. 7. The above-indicated target speed change basic wave pattern calculating means 54 is preferably configured to calculate the timewise integral value of the obtained torque difference between the input torque and the load torque of the above-described step-variable transmitting portion 20, as the basic wave pattern which is a basic pattern of change of the rotating speed of each of the first rotary element in the form of the sun gear S0, second coupling element or input rotary member in the form of the carrier C0 and third coupling element or output rotary member in the form of the ring gear R0. It is noted that when the engine torque is changed with respect to the engine speed as a linear function, the actual engine torque does not necessarily change as a linear function of the time in a strict sense, but changes along a slightly curved line. However, this discrepancy does not practically cause a problem.

The above-indicated target speed change pattern setting means 56 is configured to set, from time to time, target values $N_g^*(t)$, $Ne^*(t)$ and $N_m^*(t)$ of change patterns of the rotating speeds in the time chart of the first rotary element in the form of the sun gear S0, second rotary element or input rotary member in the form of the carrier C0 and third rotary element or output rotary member in the form of the ring gear R0 during the shifting action of the above-described step-variable transmitting portion 20, such that the target values $N_g^*(t)$, $Ne^*(t)$ and $N_m^*(t)$ match the basic wave patterns calculated by the above-described target speed change basic wave pattern calculating means 54. Namely, the target speed change pattern setting means 56 sets the target values $N_g^*(t)$, $N_e^*(t)$ and $N_m^*(t)$ of the patterns of change of the rotating speeds of the first, second and third rotary elements, by applying the basic wave patterns calculated by the above-described target speed change basic wave pattern calculating means 54, to the amounts of change (amount of increase in the case of the shift-down action) of the rotating speeds of the first, second and third rotary elements during the shifting action of the above-described step-variable transmitting portion 20, so that the set target values $N_g^*(t)$, $N_e^*$(t) and $N_m^*(t)$ match the respective calculated basic wave patterns. The word "match" is interpreted to mean that the function according to which the rotating speed of each rotary element changes is coincident with the function represented by the calculated basic wave pattern, namely, that the target pattern of change of the rotating speed of each rotary element is set so that the rotating speed of each rotary element changes as a linear function if the basic wave pattern represents a linear function, or as an exponential function if the basic wave pattern represents an exponential function.

The above-indicated engine supply energy calculating means 58 is configured to calculate an amount of energy to be supplied from the above-described engine 12 during the target shifting time period from the moment of initiation of the shifting action of the above-described step-variable transmitting portion20 to the moment of termination of the shifting action. For instance, the engine supply energy calculating means 58 calculates an energy amount $E_{in}$ to be supplied from the above-described engine 12 during the time period from the moment of initiation of the shifting action of the above-described step-variable transmitting portion 20 to the moment of termination of the shifting action, as an integral value $\int N_e^*(t) \cdot T_e(t)dt + C$ (integration constant) of a product of the engine speed and torque (= engine speed x engine torque) during the time period from the moment of initiation of the shifting action to the moment of termination of the shifting action, on the basis of the target value $N_g^*(t)$, $N_e^*(t)$, $N_m^*(t)$ of the pattern of change of the rotating speed of the second rotary element in the form of the carrier C0 corresponding to the operating speed of the engine 12, which target value is set by the above-described target speed change pattern setting means 56 as one of the target values $N_g^*(t)$, $N_e^*(t)$, $N_m^*(t)$ of the patterns of change of the rotating speeds of the rotary elements, and on the basis of the engine torque $T_e(t)$ which changes with respect to the change of the rotating speed of the second rotary element as a linear function.

The above-indicated inertia loss energy calculating means 60 is configured to calculate an inertia loss energy Ek used (consumed) by the overall transmission mechanism consisting of the above-described electrically operated continuously-variable transmitting portion 19 and step-variable transmitting portion 20, during the target shifting time period from the moment of initiation of the shifting action of the above-described step-variable transmitting portion 20 to the moment of termination of the shifting action. For example, the inertia loss energy calculating means 60 calculates rotary motion energies $I_g \cdot N_g^2/2$, $I_e \cdot N_e^2/2$, $I_m \cdot N_m^2/2$ of each rotary element before and after the shifting action, on the basis of the rotating speeds Ng, $N_e$, $N_m$ of each rotary element before and after the shifting action, and on the basis of an inertia moment Ig, $I_e$ and $I_m$. Then, the inertia loss energy calculating means 60 calculates, as an inertia loss energy $E_{loss}$ used (consumed) by the step-variable transmitting portion 20, a sum (=$I \cdot N_{gaf}^2/2 - I \cdot N_{gbe}^2/2 + I \cdot N_{maf}^2/2 - I \cdot N_{mbe}^2/2$

+ $I \cdot N_{maf}^2/2$ - $I \cdot N_{mbe}^2/2$) of amounts of change of the rotary motion energies of the rotary elements during the shifting action of the above-described step-variable transmitting portion 20, on the basis of a difference (rotary motion energy $I \cdot N_{af}^2/2$ after the shifting action - rotary motion energy $I \cdot N_{be}^2/2$) between the rotary motion energies of each rotary element before and after the shifting action of the above-described step-variable transmitting portion 20.

The above-indicated clutch torque change rate calculating means 62 is configured to calculate a rate of change of the clutch torque during the shifting action of the above-described step-variable transmitting portion 20, that is, a rate of change of the engaging torque of the above-described first brake B1 (a rate of reduction of the engaging torque of the coupling element to be released). Where a difference (engine supply energy - inertia loss energy) obtained by subtracting the inertia loss energy in the above-described step-variable transmitting portion 20 calculated by the above-described inertia loss energy calculating means from the energy amount supplied from the above-described engine 12 calculated by the above-described engine supply energy calculating means 58 is entirely transmitted in the power transmitting system 10 according to the present embodiment, the electric energy generation/consumption balance value relating to the above-described MG1 and MG2 is zeroed if the electric energy generation/consumption balance value of the overall transmission mechanism consisting of the above-described electrically operated continuously-variable transmitting portion 19 and step-variable transmitting portion 20 is zeroed. As described above, the present embodiment is configured such that the clutch torque, that is, the engaging torque of the above-described first brake B1 is reduced at a predetermined rate during the shifting action of the above-described step-variable transmitting portion 20. Accordingly, the above-described clutch torque change rate calculating means 62 is preferably configured to calculate an integral value of a product (rotating speed of the ring gear R0 * clutch torque) of the rotating speed of the ring gear R0 and the clutch torque, that is, the engaging torque of the above-described first brake B1 during the time period between the moments of initiation and termination of the shifting action, in the case where the rotating speed of the third rotary element in the form of the above-described ring gear R0 changes according to the target value of the change pattern set by the above-described target speed change pattern setting means 56. Then, the clutch torque change rate calculating means 62 calculates the rate of change (rate of reduction) of the engaging torque of the above-described first brake B1, which causes the thus calculated integral value to be equal to a difference obtained by subtracting the inertia loss energy of the above-described step-variable transmitting portion 20 calculated by the above-described inertia loss energy calculating means 60, from the energy amount to be supplied from the above-described engine 12 by the above-described engine supply energy calculating means 58.

The above-indicated control command value calculating means 50 calculates the target change of a rotary motion (target value of a change of the rotary motion) of each of the first rotary element in the form of the sun gear S0, second rotary element or input rotary member in the form of the carrier C0 and third rotary element or output rotary member in the form of the ring gear R0, when the movement of the operating point of the above-described engine 12 and the shifting action of the above-described step-variable transmitting portion 20 are concurrently controlled. Preferably, the control command value calculating means 50 sets the target change of the rotary motion of each rotary element such that the rotating speeds of the first rotary element in the form of the sun gear S0, second or input rotary element in the form of the carrier C0 and third rotary element or output rotary element in the form of the ring gear R0 change at the same rate from the values before the shifting action to the values to be established after the shifting action. Namely, the control command value calculating means 50 sets the target change of the rotary motion of each rotary element on the basis of the target shifting time period set by the target shifting time period setting means 52, such that the ratios of instantaneous changes of the rotating speeds of all of the rotary elements during the shifting action to total amounts of change of the rotating speeds during the shifting action are equal to each other.

The above-described control command value calculating means 50 is preferably configured to calculate the target change of the rotary motion (target value of the rotary motion change) of each rotary element which permits the shifting action to be controlled such that the pattern of change of the torque difference between the input torque and the load torque of the above-described step-variable transmitting portion 20 matches the patterns of change of the rotating speeds of the first rotary element in the form of the sun gear S0, second rotary element or input rotary member in the form of the carrier C0 and third rotary element or output rotary element in the form of the ring gear R0. Namely, the above-described target speed change pattern setting means 56 sets the target values $N_g^*(t)$, $N_e^*(t)$ and $N_m^*(t)$ of the change patterns of the rotating speeds of the rotary elements, which match the basic wave patterns of change of the rotating speeds calculated by the above-described target speed change basic wave pattern calculating means 54 and shown in Fig. 7. The control command value calculating means 50 sets from time to time the target change of the rotary motion of each rotary element on the basis of the thus set target change patterns.

The above-described control command value calculating means 50 is also preferably configured to set the target change of the rotary motion of each of the first rotary element in the form of the sun gear S0, second rotary element or input rotary member in the form of the carrier C0 and third rotary element or output rotary element in the form of the ring gear R0, such that a sum of the energy amount generated by the above-described engine 12 during the shifting control of the above-described step-variable transmitting portion 20, the energy amount (torque value) associated with a reaction force generated by an element provided in the above-described step-variable transmitting portion 20, namely, the energy amount to be transmitted from the step-variable transmitting portion 20 as the reaction force generated by the above-described first brake B1, and the amount of change of the rotary motion energy of each rotary element during the shifting control is equal to the predetermined target electric energy generation/consumption balance value. Preferably, the control command value calculating means 50 sets the target change of the rotary motion of each rotary element so that a sum of the energy amount supplied from the above-described engine 12 calculated by the above-described engine supply energy calculating means 58, and the inertia loss energy amount (negative value) calculated by the above-described inertia loss energy calculating means 60 is zeroed. Preferably, this sum is calculated without taking account of an amount of the electric energy generation/consumption balance value which relates to the above-described MG1 and MG2. Namely, the MG1 and MG2 which are merely freely operated are not considered to be in a working operation. In other words, the calculation of the above-indicated sum and the setting of the target change of the rotary motion of each rotary element are effected on the basis of the electric energy generation/consumption balance value calculated without taking account of the works done by the above-indicated MG1 and MG2.

The above-described control command value calculating means 50 is further preferably configured to determine whether the clutch torque, that is, the engaging torque of the above-described first brake B1 the rate of change of which has been calculated by the above-described clutch torque change rate calculating means 62 has been reduced to zero during the target shifting time period (from the moment of initiation of the shifting action to the moment of termination of the shifting action) set by the above-described target shifting time period setting means 52. If an affirmative determination is obtained by the clutch torque change rate calculating means 62, that is, the clutch torque has been zeroed during the target shifting time period, the above-described control processing operations are performed again by the above-described target shifting time period setting means 52, target speed change basic wave pattern calculating means 54, target speed change pattern setting means 56, engine supply energy calculating means 58, inertia loss energy calculating means 60 and clutch torque change rate calculating means 62. These control processing operations are performed with the target shifting time period being elongated by a suitable length of time by the above-described target shifting time period setting means 52 in view of a possibility that the pattern of the torque difference between the input torque and the load torque of the above-described step-variable transmitting portion 20 is different from the basic wave pattern calculated by the above-described target speed change basic wave pattern calculating means 54, where the clutch torque is kept at zero. The control processing operations of the above-described target speed change basic wave pattern calculating means 54 and the other means described above are performed again with the elongated target shifting time period.

Fig. 8 is the view for explaining the conditions that should be satisfied in the control according to the present embodiment. In Fig. 8, the axis about which the first rotary element in the form of the sun gear S0 is rotated is identified as a g-axis, and the axis about which the second rotary element in the form of the carrier C0 is rotated is identified as an e-axis, while the axis about which the third rotary element in the form of the ring gear R0 is rotated is identified as an m-axis. The above-described control command value calculating means 50 is preferably configured to calculate the change of the rotary motion of each rotary element on the basis of the accelerator pedal operation amount, etc. at the moment of initiation of the shifting action of the above-described step-variable transmitting portion 20, such that all of the conditions (a)-(c) indicated in Fig. 8 are satisfied. Namely, the concurrent controls of the movement of the operating point of the above-described engine 12 and the shifting action of the above-described step-variable transmitting portion 20 are implemented by the calculating and setting operations of the various means described above, to calculate the change of the rotary motion of each rotary element, so as to satisfy the condition (a) that the speeds of rotation about the g-axis, e-axis and m-axis change at the same rate from the value before the moment of initiation of the shifting action to the value to be established after the moment of termination of the shifting action, the condition (b) that the pattern of change of the torque difference between the input torque and the load torque of the above-described step-variable transmitting portion 20 during the shifting action is matched with the pattern of change of the speeds of rotation about the g-axis, e-axis and m-axis, and the condition (c) that the sum of the energy generated from the above-described engine 12 during the shifting control, the energy consumed by the load acting on the above-described step-variable transmitting portion 20 during the shifting action, and the amount of change of the rotary motion energies of the g-axis, e-axis and m-axis during the shifting control is equal to a predetermined target electric energy generation/consumption balance value.

Referring back to Fig. 4, the above-indicated clutch torque control means 70 is configured to command the hydraulic control device to control the engaging torque of at least one of the coupling elements in the form of the above-described first brake B1 and second brake B2, during the shifting action of the above-described step-variable transmitting portion 20. That is, where the above-described step-variable transmitting portion 20 is shifted from the high-speed position H to the low-speed position L, the clutch torque control means 70 commands the hydraulic control device to gradually reduce the engaging torque of the above-described first brake B 1 for thereby releasing the first brake B 1. Namely, the clutch torque control means 70 determines a command value of the clutch operating hydraulic pressure value so as to reduce the engaging torque of the above-described first brake B1 at the rate calculated or set by the clutch torque change rate calculating means 62, and applies the determined command value to a solenoid-operated control valve (not shown) provided in the hydraulic control device to control the engaging pressure of the above-described first brake B1.

The above-indicated engine torque control means 64, MG1-torque control means 66 and MG2-torque control means 68 controls the operations (torque values) of the above-described engine 12, MG1 and MG2, so as to achieve the target change of the rotary motion of each rotary element calculated by the above-described control command value calculating means 50. For instance, the control means 64, 66, 68 respectively calculate the engine torque $T_e$, MG1 torque $T_g$ and MG2 torque $T_m$, according to the following equations of motion (1), so that the target change of the rotary motion calculated by the above-described control command value calculating means 50 is achieved. In the equations of motion (1), "$\omega_g$", "$\omega_e$" and "$\omega_m$" respectively represent the operating speed of the MG1 (rotating speed or angular velocity of the sun gear SO), the operating speed of the engine 12 (rotating speed or angular velocity of the carrier C0), and the operating speed of the MG2 (rotating speed or angular velocity of the ring gear R0), and the "$T_b$" represents the clutch torque (torque of the first brake B1), while "kgg", "kge", "kgm", "kgb" , and the other "k**" represent coefficient values. The equations of motion (1) are obtained by differentiating the target values of the rotating or operating speeds of the respective axes of the above-described engine 12, MG1 and MG2. Namely, the left members of the equations of motion (1) representing the rates of change of the speed are calculated by differentiating a target value $Ng^*$ of the operating speed of the MG1, a target value $N_e^*$ of the engine speed and a target value $N_m^*$ of the operating speed of the MG2, which have been calculated by the control command value calculating means 50, as indicated in the following equation (2). The values relating to the values $T_e$ and $T_b$ in the equations of motion (1) are obtained from time to time from the rates of change of the engine torque and clutch torque set (calculated) by the above-described control command value calculating means 50, and the obtained values used in the equations of motion (1), and the torque values of the MG1 and MG2 are calculated according to the equations of motion (1) such that the calculated torque values permit the calculated target change of the rotary motion of each rotary element to be achieved at the rates of change of the engine torque and clutch torque set (calculated) by the above-described control command value calculating means 50.

[Mathematical Formulas 1]

$$(1) \begin{cases} \dot{\omega}_g(t) = kgg \cdot T_g(t) + kge \cdot T_e(t) + kgm \cdot T_m(t) + kgb \cdot T_b \\ \dot{\omega}_e(t) = keg \cdot T_g(t) + kee \cdot T_e(t) + kem \cdot T_m(t) + keb \cdot T_b \\ \dot{\omega}_m(t) = kmg \cdot T_g(t) + kme \cdot T_e(t) + kmm \cdot T_m(t) + kmb \cdot T_b \end{cases}$$

[Mathematical Formula 2]

$$(2) \begin{cases} \dot{\omega}_g(t) = dN_g^*/dt \\ \dot{\omega}_e(t) = dN_e^*/dt \\ \dot{\omega}_m(t) = dN_m^*/dt \end{cases}$$

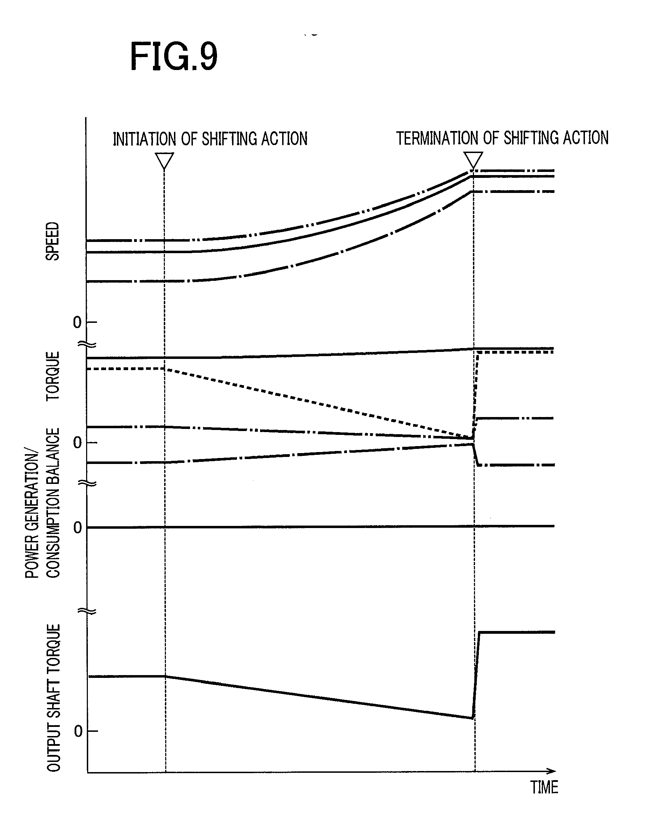

Fig. 9 is the time chart for explaining a result of simulation of the concurrent controls of the movement of the operating point of the above-described engine 12 and the shifting action of the above-described step-variable transmitting portion 20 according to the present embodiment. In Fig. 9, and Figs. 10-12 referred to later, solid lines represent the operating speed and torque of the above-described engine 12, and one-dot chain lines represent the operating speed and torque of the MG1, while two-dot chain lines represent the operating speed and torque of the MG2. In Figs. 9-12, a broken line represents the load torque of the above-described step-variable transmitting portion 20 converted as the toque at the axis of the MG2. It will be understood from Fig. 9 that the concurrent controls according to the present embodiment permit the electric power generation/consumption balance value to be kept at substantially zero during the time period from the moment of initiation of the shifting action to the moment of termination of the shifting action, and permit the output shaft torque to change in a normal pattern to be generally established in a well known shift-down action.

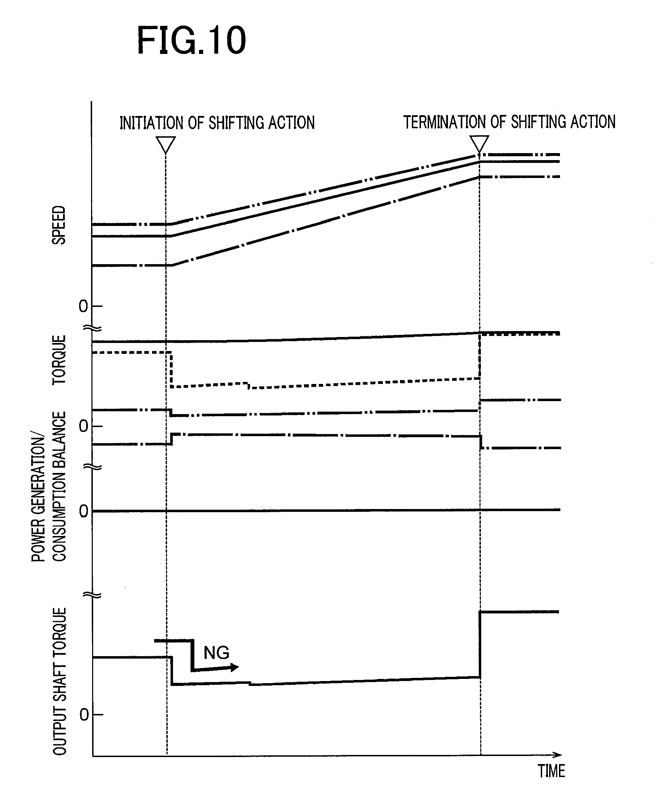

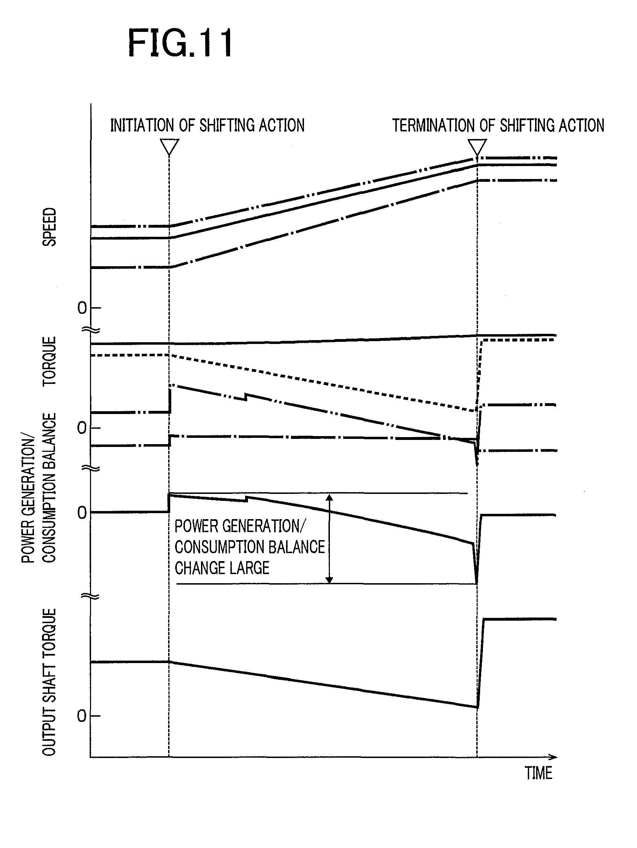

Fig. 10 and Fig. 11 are the time charts for explaining results of simulation of prior art concurrent controls of the movement of the operating point of the above-described engine 12 and the shifting action of the above-described step-variable transmitting portion 20, for comparison with the concurrent controls according to the present embodiment. It will be understood that the prior art concurrent controls indicated in Fig. 10, which are implemented so as to keep the electric power generation/consumption balance value at zero, permit the electric power generation/consumption balance value to be kept at zero, but suffer from deviation of the pattern of change of the output shaft torque from the normal pattern to be generally established in the well known shift-down action, and thus fail to permit an adequate control of the pattern of change of the output shaft torque. It will also be understood that the prior art concurrent controls indicated in Fig. 10, which are implemented so as to change the output shaft torque in the normal pattern to be generally established in the well known shift-down action, like the concurrent controls according to the present embodiment indicated in Fig. 9, permit the output shaft torque to change in the normal pattern to be generally established in the well known shift-down action, but suffer from a large amount of fluctuation of the electric power generation/consumption balance value of the overall transmission mechanism. Thus, the prior art concurrent controls do not permit the output shaft torque change in the normal pattern to be generally established in the well known shift-down action, while keeping the electric power generation/consumption balance value of the overall transmission mechanism at substantially zero. To the contrary, the concurrent controls according to the present embodiment permit the adequate shifting control.

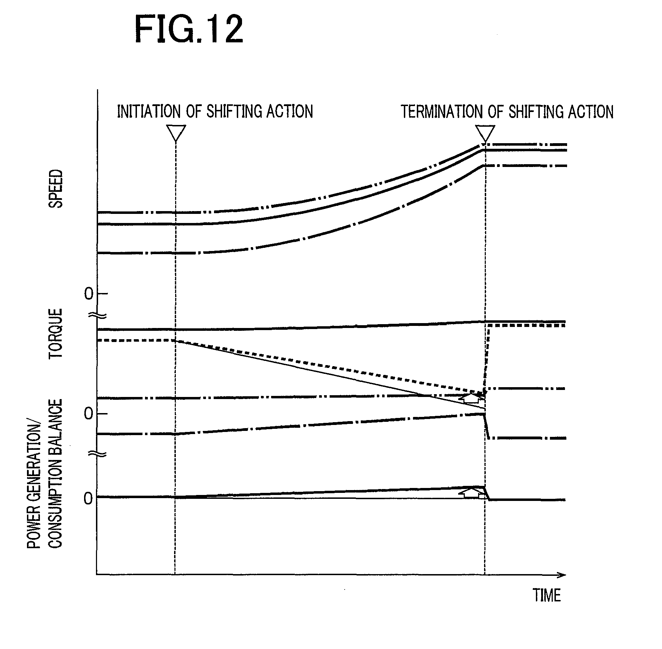

Fig. 12 is the time chart for explaining a result of simulation of the concurrent controls of the movement of the operating point of the above-described engine 12 and the shifting action of the above-described step-variable transmitting portion 20, which are implemented according to another embodiment of this invention wherein the clutch pressure (hydraulic pressure of the first brake B 1) during the shifting action is controlled by calculating the electric power generation/consumption balance value so as to positively prevent the electric energy charging/discharging balance value from being zeroed. Unlike the concurrent controls indicated in Fig. 9, the concurrent controls indicated in Fig. 12 are implemented to control the electric power generation/consumption balance to a positive value, namely, such that the balance is on the side of electric power consumption. It will be understood that the concurrent controls of Fig. 12 permit the electric power generation/consumption balance of the overall transmission mechanism to be kept at a value not equal to zero, during the shifting time period from the moment of initiation of the shifting action to the movement of termination of the shifting action, and permit the output shaft torque to change in the normal pattern to be generally established in the well known shift-down action.

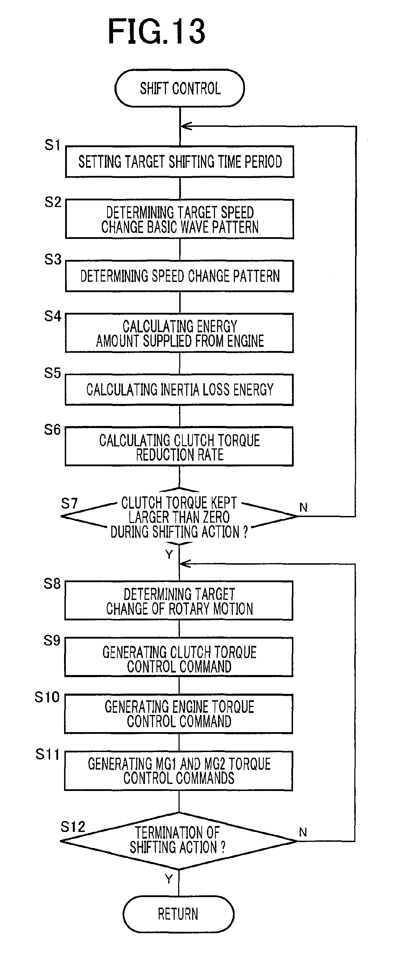

Fig. 13 is the flow chart illustrating a major portion of the shifting control by the above-described E-ECU 22, MG-ECU 34, T-ECU 44, etc. This flow chart is executed repeatedly at a predetermined interval.

Initially, step S1 ("step" being hereinafter omitted) corresponding to the operation of the above-described target shifting time period setting means 52 is implemented to set the target shifting time period from the moment of initiation of the shifting action of the above-described step-variable transmitting portion 20 to the moment of termination of the shifting action. Then, S2 corresponding to the operation of the above-described target speed change basic wave pattern calculating means 54 is implement to calculate (determine), as the basic wave pattern, the wave pattern of the timewise integral value of the torque difference between the input torque and the load torque of the above-described step-variable transmitting portion 20. Then, S3 corresponding to the operation of the above-described target speed change pattern setting means 56 is implemented to set the target change patterns of the rotating speeds of the first rotary element in the form of the sun gear S0, second rotary element or input rotary member in the form of the carrier C0 and third rotary element or output rotary member in the form of the ring gear R0 during the shifting action of the above-described step-variable transmitting portion 20, such that the target change patterns match the basic wave patterns calculated in S2. Then, S4 corresponding to the operation of the engine supply energy calculating means 58 is implemented to calculate the amount of energy to be supplied from the above-described engine 12 during the target shifting time period from the moment of initiation of the shifting action of the above-described step-variable transmitting portion20 to the moment of termination of the shifting action.

Then, S5 corresponding to the operation of the above-described inertia loss energy calculating means 60 is implemented to calculate the inertia loss energy used (consumed) by the overall transmission mechanism consisting of the above-described electrically operated continuously-variable transmitting portion 19 and step-variable transmitting portion 20, during the target shifting time period from the moment of initiation of the shifting action of the above-described step-variable transmitting portion 20 to the moment of termination of the shifting action. Then, S6 corresponding to the operation of the above-described clutch torque change rate calculating means 62 is implemented to calculate the rate of change of the clutch torque during the shifting action of the above-described step-variable transmitting portion 20, that is, the rate of reduction of the engaging torque of the coupling element in the form of the above-described first brake B1 to be released. Then, the control flow goes to S7 to determine whether the engaging torque of the above-described first brake B 1 the rate of change of which has been calculated in S6 is kept larger than zero during the target shifting time period (from the moment of initiation of the shifting action to the moment of termination of the shifting action) set in S1. If a negative determination is obtained in S7, the control flow goes back to S1 and the following steps. If an affirmative determination is obtained in S7, the control flow goes to S8 to determine the target change of the rotary motion of each of the first rotary element in the form of the sun gear S0, second rotary element or input rotary member in the form of the carrier C0 and third rotary element or output rotary member in the form of the ring gear R0, on the basis of the calculations and settings in S1-S6.

Then, S9 corresponding to the operation of the above-described clutch torque control means 70 is implemented to determine the command value of the clutch operating hydraulic pressure value so as to reduce the engaging torque of the above-described first brake B1 at the rate calculated or set in S6, and to apply the determined command value to the solenoid-operated control valve provided for controlling the engaging pressure of the above-described first brake B1. Then, the control flow goes to S10 to apply the commanded torque value to the above-described engine 12 so as to generate the engine torque so that the generated engine torque and the engine speed determined by the pattern of change of the rotating speed of the corresponding rotary element set in S3 define the desired operating point of the engine 12. The control flow then goes to S11 to apply the commanded torque values to the above-described MG1 and MG2 so as to achieve the target change of the rotary motion of each rotary element determined in S8. Then, the control flow goes to S12 to determine whether the shifting action of the above-described step-variable transmitting portion 20 (to establish the low-speed position L) is terminated. If a negative determination is obtained in S12, the control flow goes back to S8 and the following steps. If an affirmative determination is obtained in S12, one cycle of execution of the present control routine is terminated. In this control routine, S1-S8 correspond to the operation of the above-described control command value calculating means 50.

As described above, the control apparatus according to the illustrated embodiments is configured to implement the concurrent controls of the movement of the operating point of the above-described engine 12 and the shifting action of the above-described step-variable transmitting portion 20, such that the electric energy generation/consumption balance value in the overall transmission mechanism consisting of the above-described electrically operated continuously-variable transmitting portion 19 and step-variable transmitting portion 20 is controlled by controlling the change of the rotary motion of each of at least one of the first rotary element in the form of the sun gear S0, second rotary element in the form of the carrier C0 and the third rotary element in the form of the ring gear R0, so that a shifting shock of the step-variable transmitting portion can be reduced while controlling the electric energy generation/consumption balance to a desired value. Namely, the present control apparatus for the hybrid vehicle 8 permits an adequate control of the shifting action while reducing deterioration of fuel economy of the hybrid vehicle 8.

The present control apparatus is further configured to change the rotating speeds of the above-described first, second and third rotary elements at the same rate from the values before the above-described shifting action to the values to be established after the shifting action. Accordingly, the electric energy generation/consumption balance can be controlled to the desired value in a practically advantageous manner.

The present control apparatus is further configured to control the above-described shifting action such that the pattern of change of the torque difference between the input torque of the above-described step-variable transmitting portion 20 and the torque associated with the reaction force of an element in the form of the above-described first brake B1 provided in the step-variable transmitting portion 20 matches the pattern of change of the rotating speed of each of the above-described first, second and third rotary elements. Accordingly, the electric energy generation/consumption balance can be controlled to the desired value in a practically advantageous manner.

The present control apparatus is further configured to control the above-described shifting action such that the sum of the energy amount generated by the above-described engine 12 during the above-described shifting action, the energy amount which is associated with the reaction force generated during the shifting action by the element in the form of the above-described first brake B1 provided in the above-described step-variable transmitting portion 20 and which is transmitted from the step-variable transmitting portion 20, and the amount of change of the rotary motion energy of each of the above-described first, second and third rotary elements during the above-described shifting action is equal to the predetermined target value of the electric energy generation/consumption balance value. In this case, the electric energy generation/consumption balance can be controlled to the desired value in a practically advantageous manner.

The present control apparatus is further configured to calculate the above-described sum without taking account of an amount of the electric energy generation/consumption balance value which relates to the first and second electric motors in the form of the above-described MG1 and MG2. In this case, the electric energy generation/consumption balance can be controlled to the desired value in a practically advantageous manner.

While the preferred embodiment of this invention has been described in detail by reference to the drawings, it is to be understood that the invention is not limited to the details of the illustrated embodiment, and may be otherwise embodied.

In the illustrated embodiment, the principle of the present invention is applied to the control of a power transmitting mechanism wherein the above-described electrically operated continuously-variable transmitting portion 19 and step-variable transmitting portion 20 are connected in series with each other by the output shaft 14. However, the application of the invention is not limited to this type of power transmitting mechanism. For instance, the invention is equally applicable to a power transmitting mechanism wherein a single coupling element or a plurality of coupling elements (clutch or clutches) is/are disposed between the above-described electrically operated continuously-variable transmitting portion 19 and step-variable transmitting portion 20. Namely, a step-variable transmitting portion provided in a hybrid vehicle to which the present invention is applicable is not limited to the one provided in the illustrated embodiment, but is equally applicable to a multi-step transmitting portion having three or more speed positions, for example. The present invention is also applicable to a hybrid vehicle provided with a continuously-variable transmission such as a CVT operable to perform shifting actions in multiple steps having respective different speed ratios.

In the illustrated embodiments, the principle of the present invention is applied to the shifting control of the above-described step-variable transmitting portion 20 to establish the low-speed position L by releasing the coupling element in the form of the above-described first brake B1 while locking the one-way clutch OWC. However, the principle of the invention is equally applicable to the control of a so-called "clutch-to-clutch shifting action" to be performed by concurrent releasing and engaging actions of a plurality of coupling elements of a step-variable transmitting portion, for example.

Although the illustrated embodiment is configured to calculate the target value of the speed change rates of rotary elements, by using the equations (1) of motions, this target value may be calculated by using a plurality of maps between the target speed change rate value, and the accelerator pedal operation amount, for instance, which maps are prepared by experimentation or simulation.

It is to be further understood that the present invention may be embodied with various other changes not illustrated herein, without departing from the spirit of the invention.

NOMENCLATURE OF REFERENCE SIGNS

8: Hybrid vehicle 10: Power transmitting system
12: Engine 14: Output shaft
16: Power distributing device (Differential mechanism)
17: Differential gear device 18: Drive wheels
19: Electrically operated continuously-variable transmitting portion
20: Step-variable transmitting portion 22: Electronic control device
24: Accelerator pedal 26: Brake pedal 28, 30: Inverters
32: Electric-energy storage device 34: Electronic control device
36: Shift lever 38: Crankshaft 40: Damper 42: Housing
44: Electronic control device 46, 48: Planetary gear sets
50: Control command value calculating means
52: Target shifting time period setting means
54: Target speed change basic wave pattern calculating means
56: Target speed change patter setting means
58: Engine supply energy calculating means
60: Inertia loss energy calculating means
62: Clutch torque change rate calculating means
64: Engine torque control means 66: MG1-torque control means
68: MG2-torque control means 68: Clutch torque control means
AS: Accelerator angle sensor BS: Brake sensor
B1: First brake B2: Second brake
C0: Carrier (Second rotary element, Input rotary member)
NS: Engine speed sensor MG1: First motor/generator (First electric motor)
MG2: Second motor/generator (second electric motor)
OWC: One-way clutch RE1: MG1 resolver RE2: MG2 resolver
R0: Ring gear (Third rotary element, Output rotary member)
SS: Shift position sensor SW1: First hydraulic pressure switch
SW2: Second hydraulic pressure switch
SW3: Third hydraulic pressure switch
S0: Sun gear (First rotary element) TS: Temperature sensor

**Claims**

1. A control apparatus for a hybrid vehicle provided with
   a differential mechanism provided with a first rotary element, a second rotary element functioning as an input rotary element and connected to an engine, and a third rotary element functioning as an output rotary element;
   a first electric motor connected to said first rotary element;
   an electrically operated continuously-variable transmitting portion having a second electric motor operatively connected to a power transmitting path from said third rotary element to drive wheels; and
   a step-variable transmitting portion constituting a part of a power transmitting path from said electrically operated continuously-variable transmitting portion to the drive wheels,

**characterized by** implementing concurrent controls of a movement of an operating point of said engine and a shifting action of said step-variable transmitting portion, such that an electric energy generation/consumption balance value in an overall transmission mechanism including said electrically operated continuously-variable transmitting portion and step-variable transmitting portion is controlled by controlling a change of a rotary motion of each of at least one of said first, second and third rotary elements.

2. The control apparatus according to claim 1, which is configured to change rotating speeds of said first, second and third rotary elements at the same rate from values before said shifting action to values to be established after the shifting action.

3. The control apparatus according to claim 1 or 2, which is configured to control said shifting action such that a pattern of change of a torque difference between an input torque of said step-variable transmitting portion and a torque associated with a reaction force of an element provided in the above-described step-variable transmitting portion matches a pattern of change of a rotating speed of each of said first, second and third rotary elements.

4. The control apparatus according to any one of claims 1-3, which is configured to control said shifting action such that a sum of an energy amount generated during the shifting action by said engine, an energy amount which is associated with a reaction force generated by an element provided in said step-variable transmitting portion during said shifting action, and an amount of change of a rotary motion energy of each of said first, second and third rotary elements during said shifting action is equal to a predetermined target value of the electric energy generation/consumption balance value.

5. The control apparatus according to claim 4, which is configured to calculate said sum without taking account of an amount of the electric energy generation/consumption balance value which relates to said first and second electric motors.

FIG.1

# FIG.2

MG1        E/G       OUTPUT SHAFT

0
rpm

S           C       R

$$1 \qquad \rho = \frac{Z_s}{Z_r}$$

# FIG.3

MG2      OUTPUT MEMBER

H

L

B2     B1    0 rpm

S2        R1,C2      C1,R2      S1

# FIG.4

50

**CONTROL COMMAND VALUE CALCULATING MEANS**

52 — TARGET SHIFTING TIME PERIOD SETTING MEANS

54 — TARGET SPEED CHANGE BASIC WAVE PATTERN CALCULATING MEANS

56 — TARGET SPEED CHANGE PATTERN SETTING MEANS

58 — ENGINE SUPPLY ENERGY CALCULATING MEANS

60 — INERTIA LOSS ENERGY CALCULATING MEANS

62 — CLUTCH TORQUE CHANGE RATE CALCULATING MEANS

CLUTCH TORQUE CONTROL MEANS
70

ENGINE TORQUE CONTROL MEANS
64

MG1-TORQUE CONTROL MEANS
66

MG2-TORQUE CONTROL MEANS
68

# FIG.5

ELECTRICALLY OPERATED
CONTINUOUSLY-VARIABLE
TRANSMITTING PORTION 19

STEP-VARIABLE
TRANSMITTING PORTION 20

ENGINE SPEED

ISO-POWER LINES

ENGINE
OPERATING
POINT

ENGINE
OPERATING POINT

HIGHEST FUEL
ECONOMY CURVE

ENGINE TORQUE

up
down

MG1　ENGINE　MG2, S2
(INPUT TO
TRANSMITTING
PORTION 19)

R1, C2
(INPUT TO
TRANSMITTING
PORTION 20)

C1, R3　S1

# FIG.6

TORQUE

TORQUE
DIFFERENCE

TIME

TARGET SHIFTING TIME PERIOD

# FIG.7

INTEGRAL VALUE OF
TORQUE DIFFERENCE

TARGET SPEED
CHANGE BASIC PATTERN

TIME

20

# FIG.8

SPEEDS OF INDIVIDUAL MEMBERS

● : SPEED AFTER SHIFTING ACTION

○ : SPEED DURING SHIFTING ACTION

● : SPEED BEFORE SHIFTING ACTION

k : 1-k

m-AXIS SPEED

e-AXIS SPEED

g-AXIS SPEED

TIME

(a) SPEEDS OF ALL MEMBERS CHANGE AT THE SAME RATE

SPEED CHANGE RATE

(b) PATTERN OF DIFFERENCE BETWEEN T/M INPUT SHAFT TORQUE AND COUPLING ELEMENT TORQUE IS MATCHED WITH SPEED CHANGE RATE PATTERN

g-AXIS SPEED CHANGE RATE

e-AXIS SPEED CHANGE RATE

m-AXIS SPEED CHANGE RATE

TIME

TORQUE

g-AXIS INERTIA TORQUE

m-AXIS INERTIA TORQUE

e-AXIS INERTIA TORQUE

T/M INPUT SHAFT TORQUE RECEIVED FROM ENGINE

ENERGY TRANSMITTED THROUGH COUPLING ELEMENT DURING SHIFTING ACTION

DIFFERENCE BETWEEN T/M INPUT SHAFT TORQUE AND COUPLING ELEMENT TORQUE

WORK DONE BY g-AXIS INERTIA INCREASE

WORK DONE BY m-AXIS INERTIA INCREASE

WORK DONE BY e-AXIS INERTIA INCREASE

TIME

(c) ENERGY GENERATION/CONSUMPTION BALANCE DURING SHIFTING ACTION, WHICH IS MATCHED WITH TARGET ELECTRIC POWER CONSUMPTION/STORAGE BALANCE

ENERGY GENERATED BY ENGINE DURING SHIFTING ACTION

COUPLING ELEMENT TORQUE (CONVERTED AS T/M INPUT SHAFT TORQUE)

21

EP 2 623 384 A1

# FIG.9

INITIATION OF SHIFTING ACTION

TERMINATION OF SHIFTING ACTION

SPEED

0

POWER GENERATION/
CONSUMPTION BALANCE

TORQUE

0

0

OUTPUT SHAFT TORQUE

0

TIME

# FIG.10

INITIATION OF SHIFTING ACTION      TERMINATION OF SHIFTING ACTION

SPEED

0

TORQUE

0

POWER GENERATION/ CONSUMPTION BALANCE

0

OUTPUT SHAFT TORQUE

NG

0

TIME

# FIG.11

INITIATION OF SHIFTING ACTION

TERMINATION OF SHIFTING ACTION

SPEED

0

TORQUE

0

POWER GENERATION/CONSUMPTION BALANCE

0

POWER GENERATION/
CONSUMPTION BALANCE
CHANGE LARGE

OUTPUT SHAFT TORQUE

0

TIME

FIG.12

# FIG.13

```
            ( SHIFT CONTROL )
                    │
                    ▼◄──────────────────────┐
S1  ┌──────────────────────────────────┐    │
    │  SETTING TARGET SHIFTING TIME PERIOD │  │
    └──────────────────────────────────┘    │
                    │                        │
S2  ┌──────────────────────────────────┐    │
    │     DETERMINING TARGET SPEED      │    │
    │     CHANGE BASIC WAVE PATTERN     │    │
    └──────────────────────────────────┘    │
                    │                        │
S3  ┌──────────────────────────────────┐    │
    │   DETERMINING SPEED CHANGE PATTERN │   │
    └──────────────────────────────────┘    │
                    │                        │
S4  ┌──────────────────────────────────┐    │
    │        CALCULATING ENERGY         │    │
    │    AMOUNT SUPPLIED FROM ENGINE    │    │
    └──────────────────────────────────┘    │
                    │                        │
S5  ┌──────────────────────────────────┐    │
    │    CALCULATING INERTIA LOSS ENERGY │   │
    └──────────────────────────────────┘    │
                    │                        │
S6  ┌──────────────────────────────────┐    │
    │      CALCULATING CLUTCH TORQUE    │    │
    │          REDUCTION RATE           │    │
    └──────────────────────────────────┘    │
                    │                        │
S7        ╱ CLUTCH TORQUE KEPT ╲    N        │
         ╱    LARGER THAN ZERO   ╲───────────┘
         ╲ DURING SHIFTING ACTION?╱
                   Y│
                    ▼◄──────────────────────┐
S8  ┌──────────────────────────────────┐    │
    │      DETERMINING TARGET           │    │
    │    CHANGE OF ROTARY MOTION        │    │
    └──────────────────────────────────┘    │
                    │                        │
S9  ┌──────────────────────────────────┐    │
    │     GENERATING CLUTCH TORQUE      │    │
    │        CONTROL COMMAND            │    │
    └──────────────────────────────────┘    │
                    │                        │
S10 ┌──────────────────────────────────┐    │
    │     GENERATING ENGINE TORQUE      │    │
    │        CONTROL COMMAND            │    │
    └──────────────────────────────────┘    │
                    │                        │
S11 ┌──────────────────────────────────┐    │
    │    GENERATING MG1 AND MG2 TORQUE  │    │
    │        CONTROL COMMANDS           │    │
    └──────────────────────────────────┘    │
                    │                        │
S12        ╱ TERMINATION OF ╲     N          │
          ╱  SHIFTING ACTION? ╲──────────────┘
                   Y│
                    ▼
            ( RETURN )
```

## INTERNATIONAL SEARCH REPORT

International application No.

PCT/JP2010/066735

### A. CLASSIFICATION OF SUBJECT MATTER
*B60W10/10*(2006.01)i, *B60K6/445*(2007.10)i, *B60K6/543*(2007.10)i, *B60K6/547* (2007.10)i, *B60W10/08*(2006.01)i, *B60W20/00*(2006.01)i

According to International Patent Classification (IPC) or to both national classification and IPC

### B. FIELDS SEARCHED

Minimum documentation searched (classification system followed by classification symbols)
B60W10/10, B60K6/445, B60K6/543, B60K6/547, B60W10/08, B60W20/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2009-096363 A (Toyota Motor Corp.),<br>07 May 2009 (07.05.2009),<br>paragraphs [0042] to [0053]; fig. 5 to 9<br>(Family: none) | 1,2<br>3-5 |
| A | JP 2009-154723 A (Toyota Motor Corp.),<br>16 July 2009 (16.07.2009),<br>entire text; all drawings<br>(Family: none) | 1-5 |
| A | JP 2009-166643 A (Toyota Motor Corp.),<br>30 July 2009 (30.07.2009),<br>entire text; all drawings<br>(Family: none) | 1-5 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>    13 December, 2010 (13.12.10) | Date of mailing of the international search report<br>    21 December, 2010 (21.12.10) |
| Name and mailing address of the ISA/<br>    Japanese Patent Office | Authorized officer |
| Facsimile No. | Telephone No. |

Form PCT/ISA/210 (second sheet) (July 2009)

27

**EP 2 623 384 A1**

**Patent documents cited in the description**

- JP 2009166643 A
- JP 2009154724 A
- JP 2009096363 A